# EUROPÄISCHE PATENTSCHRIFT

(11) **EP 4 431 337 B1**
(45) Veröffentlichungstag und Bekanntmachung des Hinweises auf die Patenterteilung: **06.05.2026**
(21) Anmeldenummer: 23162428.9
(22) Anmeldetag: 16.03.2023
(51) Int. Cl.: G02B 7/00, G02B 26/08, F21S 41/39, F21S 41/675

(54) **BAUTEIL FÜR EINEN KRAFTFAHRZEUGSCHEINWERFER**
COMPONENT FOR A MOTOR VEHICLE HEADLIGHT
COMPOSANT POUR UN PHARE DE VÉHICULE AUTOMOBILE

(43) Veröffentlichungstag der Anmeldung: 18.09.2024
(73) Patentinhaber: ZKW Group GmbH, 3250 Wieselburg (AT)
(72) Erfinder: Zeuner, Markus, 3240 Mank (AT); Hacker, Alexander, 3150 Wilhelmsburg (AT)
(74) Vertreter: Patentanwaltskanzlei Matschnig & Forsthuber OG

(56) Entgegenhaltungen:
- EP-A1- 2 279 907
- EP-A1- 2 693 108
- EP-B1- 2 217 854
- US-A- 3 625 796

## Beschreibung

Die Erfindung betrifft ein Bauteil für einen Kraftfahrzeugscheinwerfer,
wobei das Bauteil ein Trägerelement und eine Bauteilkomponente, insbesondere ein DMD-Element, aufweist, wobei das Trägerelement eine zur Aufnahme der Bauteilkomponente ausgebildete Aufnahmeöffnung aufweist, wobei die Aufnahmeöffnung durch eine Randfläche begrenzt ist, wobei die Bauteilkomponente in die Aufnahmeöffnung entlang einer Einsetzrichtung einsetzbar ausgebildet ist und eine Seitenfläche aufweist, wobei die Bauteilkomponente im in die Aufnahmeöffnung eingesetzten Zustand relativ zu der Aufnahmeöffnung in einer Einsetzposition angeordnet ist, in welcher die Seitenfläche der Bauteilkomponente der Randfläche der Aufnahmeöffnung zugewandt ist, wobei in der Einsetzposition ein erster Seitenflächenabschnitt der Seitenfläche einen ersten Randflächenabschnitt der Randfläche kontaktiert und ein zweiter Seitenflächenabschnitt der Seitenfläche zu einem zweiten Randflächenabschnitt der Randfläche einen vorgegebenen Mindestabstand aufweist,
wobei das Trägerelement ein Auflageelement aufweist, an welchem die Bauteilkomponente in der Einsetzposition zumindest abschnittsweise aufliegt, um gegen eine Verschiebung entlang der Einsetzrichtung über die Einsetzposition hinaus gesichert zu sein,
wobei die Bauteilkomponente in einem Grundzustand eine erste Temperatur und in einem Betriebszustand eine zweite Temperatur, welche höher als die erste Temperatur ist, aufweist, wobei das Bauteil dazu eingerichtet ist, die Bauteilkomponente im Grundzustand und im Betriebszustand in der Einsetzposition zu halten, wobei
das Bauteil zumindest ein elastisches Ausgleichselement auf, welches an einem dem ersten Randflächenabschnitt gegenüberliegenden zweiten Randflächenabschnitt der Randfläche angeordnet ist, wobei das zumindest eine elastische Ausgleichselement den zweiten Randflächenabschnitt der Randfläche mit dem zweiten Seitenflächenabschnitt der Seitenfläche der Bauteilkomponente verbindet, wobei das zumindest eine elastische Ausgleichselement dazu eingerichtet ist, eine Ausgleichskraft, in Reaktion auf eine thermische Verformung der Bauteilkomponente, auf die Bauteilkomponente zu übertragen, wobei die Ausgleichskraft entlang einer Richtung wirkt, welche einer thermischen Verformungsrichtung der Bauteilkomponente entgegengesetzt ist, wobei das zumindest eine elastische Ausgleichselement derart ausgestaltet und dazu eingerichtet ist, durch dessen erwirkbare Ausgleichskraft bei einem Übergang vom Grundzustand in den Betriebszustand die Bauteilkomponente, insbesondere im Wesentlichen, in der Einsetzposition zu halten.

Das zumindest eine elastische Ausgleichselement umfasst ein Schaummaterial, welches bevorzugt elastisch und aushärtbar ausgebildet ist.

Die Erfindung betrifft weiters einen Kraftfahrzeugscheinwerfer, umfassend ein Bauteil.

Die Erfindung betrifft weiters ein Verfahren zur Herstellung eines Bauteils.

Aus dem Stand der Technik sind gattungsgemäße Bauteile, die ein Trägerelement und eine darin eingesetzte Bauteilkomponente aufweisen, bekannt. Oftmals ist es erforderlich, das Bauteil in einer bestimmten vorgegebenen Relativposition zum Trägerelement zu halten, während das Bauteil in verschiedenen Betriebszuständen vorliegt. Das Einbringen von Abstandshaltern oder ähnlichen Halteelementen hat sich in der Praxis als unzureichend herausgestellt.

Das Dokument EP 2 217 854 B1 beschreibt einen Scheinwerfer für ein Kraftfahrzeug mit einer temperaturkompensierten Aufnahme eines Lichtmoduls. Das Lichtmodul ist über einen Dehnungskörper in einem Tragrahmen befestigt, dessen temperaturbedingte Längenänderung eine Neigungsänderung des Moduls kompensiert. Dies gewährleistet eine konstante Lichtprojektion unabhängig von Temperaturschwankungen.

Das Dokument US 3,625,796 A beschreibt eine Methode zur Herstellung einer Fahrzeugleuchteneinheit, insbesondere für Signalleuchten wie Park-, Rück- und Blinkerleuchten. Statt mechanischer Befestigung mit Schrauben und Dichtungen wird eine Linse durch einen thermoplastischen Kleber in eine Nut des Gehäuses geklebt. Beim Erkalten bildet das Harz eine spannungsfreie, wasserdichte Verbindung, die Produktionskosten senkt und die Dichtigkeit verbessert.

Die Aufgabe der vorliegenden Erfindung besteht darin, die Nachteile des Standes der Technik zu lindern bzw. zu beseitigen. Die Erfindung setzt sich daher insbesondere zum Ziel, ein Bauteil zu schaffen, bei welchem die Verbindung einer Bauteilkomponente mit einem Trägerelement verbessert wird.

Diese Aufgabe wird durch ein Bauteil mit den Merkmalen von Anspruch 1 und mit einem Verfahren mit den Merkmalen von Anspruch 13 gelöst. Bevorzugte Ausführungen sind in den abhängigen Ansprüchen angegeben.

Das erfindungsgemäße Bauteil verfügt über den Vorteil, dass die Relativposition der Bauteilkomponente zu dem Trägerelement im Wesentlichen gleichbleibt und, dass thermische Ausdehnungskräfte, welche die Relativposition verändern würden, durch das Ausgleichselement kompensiert werden. Es können auch zwei oder mehr Ausgleichselemente an dem zweiten Randflächenabschnitt angeordnet sein. Insbesondere können auch an weiteren Randflächenabschnitten, vorzugsweise an zwei weiteren sich gegenüberliegenden Randflächenabschnitten, zumindest ein oder mehrere Ausgleichselemente angeordnet sein, welche jeweils eine weitere Ausgleichskraft, entgegengesetzt zu einer weiteren Verformungsrichtung bzw. weiteren Verformungsrichtungen, erwirken. Dadurch, dass das zumindest eine Ausgleichselement als, bevorzugt aushärtbares, Schaummaterial ausgebildet ist, kann das Ausgleichselement nach oder vor dem Einsetzen der Bauteilkomponente in die Aufnahmeöffnung an dem entsprechenden Randflächenabschnitt (bzw. bei der Verwendung mehrerer Ausgleichselemente an den entsprechenden Randflächenabschnitten) aufgebracht werden, wodurch die Assemblierung des Bauteils vereinfacht wird. Dies ist ein wesentlicher Vorteil gegenüber Feststoffausgleichselementen (beispielsweise elastische "shims" aus Gummi) welche während dem Einbringen der Bauteilkomponente in einer vorgegebenen Position gehalten werden müssen. Besonders vorteilhaft ist, dass das Schaummaterial mit einem automatisierten Verfahren, beispielsweise mittels einer von einem Roboter gesteuerten Düse, während dem Assemblierungsprozess der Bauteilkomponente in den Zwischenraum, welcher zwischen der Aufnahmeöffnung des Trägerelements und der Bauteilkomponente ausgebildet ist, einbringbar ist. Damit muss das Ausgleichselement nicht gesondert gehalten und justiert werden. Eine durch die Wärmeausdehnung der Bauteilkomponente und/oder des Trägerelements bedingte Verschiebung der Bauteilkomponente innerhalb einer Hauptebene, in welcher die Aufnahmeöffnung und die Bauteilkomponente liegen, kann vorteilhafterweise durch das zumindest eine elastische Ausgleichselement kompensiert werden. Insbesondere sind die Ausgleichskraft und die thermische Verformungsrichtung innerhalb der Hauptebene orientiert. Durch die von dem zumindest einen elastischen Ausgleichselement wirkende Ausgleichskraft bleibt die Relativposition von der Bauteilkomponente zum Trägerelement beim Übergang vom Grundzustand in den Betriebszustand im Wesentlichen konstant. Durch die erfindungsgemäße Anordnung der Bauteilkomponente in der Aufnahmeöffnung kann insbesondere eine so genannte "Festlager-Loslager"-Lagerung erreicht werden, da die Bauteilkomponente an einer Seite an der Aufnahmeöffnung anliegt bzw. den ersten Randflächenabschnitt kontaktiert (Festlager) und die verbleibenden Seiten der Aufnahmeöffnung (der zweite Randflächenabschnitt) beabstandet (Loslager), wobei in dem dadurch vorhandenen Spalt zumindest ein Ausgleichselement angeordnet ist. Das Trägerelement kann insbesondere aus Kunststoff oder Metall gebildet sein. Die Bauteilkomponente kann beispielsweise ein Keramikmaterial umfassen. Die Bauteilkomponente kann insbesondere ein DMD-Element ("digital micromirror device"; Anordnung von Mikrospiegelaktoren), welches beispielsweise Keramik aufweist oder auf einem Keramiksubstrat aufgebracht ist, umfassen. Das Trägerelement ist beispielsweise ein Trägerrahmen für ein DMD-Element. Insbesondere sind die Wärmeausdehnungskoeffizienten des Trägerelements und der Bauteilkomponente, vorzugsweise um einen Faktor 10-15, unterschiedlich.

Es kann vorgesehen sein, dass das zumindest eine elastische Ausgleichselement dazu eingerichtet ist, bei einem Übergang von dem Betriebszustand in den Grundzustand eine der Ausgleichskraft entgegengesetzte Rückstellkraft auf die Bauteilkomponente auszuüben, um die Bauteilkomponente bei einem Übergang vom Betriebszustand in den Grundzustand in der Einsetzposition zu halten.

Es kann vorgesehen sein, dass der Mindestabstand zwischen dem zweiten Randflächenabschnitt der Randfläche der Aufnahmeöffnung und dem zweiten Seitenflächenabschnitt der Seitenfläche der Bauteilkomponente im Grundzustand größer ist als im Betriebszustand. Dies ist gleichbedeutend mit einer Verkleinerung des Mindestabstands während dem Übergang von Grundzustand in den Betriebszustand, wobei diese Verkleinerung durch die Krafteinwirkung der Ausgleichselemente minimiert werden kann.

Es kann vorgesehen sein, dass die Bauteilkomponente und das Trägerelement derart ausgestaltet sind, dass im Grundzustand der Mindestabstand größer ist als eine temperaturbedingte relative Längenänderung der Bauteilkomponente entlang zumindest einer thermischen Ausdehnungsrichtung, welche orthogonal auf die Einsetzrichtung orientiert ist und insbesondere innerhalb einer die Aufnahmeöffnung definierende Hauptebene liegt.

Es kann vorgesehen sein, dass in der Einsetzposition die Bauteilkomponente derart in der Aufnahmeöffnung eingesetzt ist, dass im Grundzustand der Mindestabstand entlang des gesamten zweiten Randflächenabschnitts der Randfläche der Aufnahmeöffnung im Wesentlichen gleich groß ist.

Es kann vorgesehen sein, dass der Mindestabstand als ein Orthogonalabstand zwischen der Seitenfläche der Bauteilkomponente und der Randfläche der Aufnahmeöffnung definiert ist.

Es kann vorgesehen sein, dass die Aufnahmeöffnung als ein in dem Trägerelement ausgebildetes Durchgangsloch ausgestaltet ist.

Es kann vorgesehen sein, dass das Auflageelement zumindest zwei Auflagevorsprünge aufweist, welche bevorzugt an gegenüberliegenden Seiten der Aufnahmeöffnung angeordnet sind, wobei sich die zumindest zwei Auflagevorsprünge in Richtung eines Zentrums der Aufnahmeöffnung erstrecken, wobei in der Einsetzposition die Bauteilkomponente die zumindest zwei Auflagevorsprünge derart kontaktiert, sodass ein vollständiges Durchsetzen von der Bauteilkomponente durch die Aufnahmeöffnung hindurch blockiert ist.

Es kann vorgesehen sein, dass die Bauteilkomponente die Aufnahmeöffnung zumindest abschnittsweise durchsetzt.

Es kann vorgesehen sein, dass die Bauteilkomponente ein erstes Material, welches einen ersten Wärmeausdehnungskoeffizient aufweist, und das Trägerelement ein zweites Material, welches einen zweiten Wärmeausdehnungskoeffizient, welcher von dem ersten Wärmeausdehnungskoeffizient unterschiedlich ist, aufweist, sodass bei einem Übergang von dem Grundzustand in den Betriebszustand die Wärmeausdehnung der Bauteilkomponente unterschiedlich, insbesondere größer, zur Wärmeausdehnung des Trägerelements ist.

Es kann vorgesehen sein, dass das Schaummaterial ein 2-Komponenten Polyurethan Material, beispielsweise FERMAPOR K31, oder ein Einkomponenten-Dichtstoff, beispielsweise auf Polyurethan- oder Siliconbasis, ist.

Es kann vorgesehen sein, dass das Schaummaterial ein Material umfasst, dessen elastisches Verhalten (welches insbesondere vor dem Aushärten vorliegt) mit dem Hookeschen Gesetz beschreibbar ist.

Es kann vorgesehen sein, dass das Schaummaterial ein Material umfasst, welches eine Mindesthaftkraft zwischen der Randfläche der Aufnahmeöffnung und/oder der Seitenfläche der Bauteilkomponente aufweist, wobei durch die Mindesthaftkraft ein Anhaften des Schaummaterials an der Randfläche und/oder an der Seitenfläche zumindest gegen die Schwerkraft erreichbar ist.

Erfindungsgemäß ist vorgesehen, dass das Trägerelement zumindest eine Einführöffnung aufweist, welche an einer der Randfläche der Aufnahmeöffnung abgewandten Außenfläche des Trägerelements angeordnet ist und sich von der Außenfläche hin zur Randfläche erstreckt, wobei das zumindest eine elastische Ausgleichselement über die Einführöffnung hin zu der Bauteilkomponente einbringbar ist.

Es kann vorgesehen sein, dass das Schaummaterial derart ausgebildet ist, dass es in einem Zuführzustand mit einer Zuführungsvorrichtung in die Einführöffnung einbringbar ist, wobei das Schaummaterial vor und während der Zuführung plastisch ausgebildet ist und nach der Zuführung aushärtbar ausgebildet ist, wobei das ausgehärtete Schaummaterial das zumindest eine elastische Ausgleichselement ausbildet.

Es kann vorgesehen sein, dass der zweite Randflächenabschnitt der Randfläche eine Vertiefung aufweist, in welche das zumindest eine elastische Ausgleichselement zumindest abschnittsweise aufgenommen ist.

Es kann vorgesehen sein, dass der zweite Randflächenabschnitt der Randfläche an zwei sich gegenüberliegenden weiteren Abschnitten jeweils ein weiteres elastisches Ausgleichselement aufweist, wobei vorzugsweise die zwei weiteren Abschnitte des zweiten Randflächenabschnitts jeweils eine Vertiefung aufweisen, in welche ein weiteres elastisches Ausgleichselement zumindest abschnittsweise aufgenommen ist, oder jeweils eine weitere Einführöffnung aufweisen, über welche Schaummaterial zur Ausbildung der elastischen Ausgleichselemente zuführbar ist.

Es kann ein Kraftfahrzeugscheinwerfer vorgesehen sein, welcher ein erfindungsgemäßes Bauteil umfasst.

Erfindungsgemäß ist ein Verfahren zur Herstellung eines Bauteils vorgesehen, wobei das Verfahren die folgenden Schritte aufweist:
a) Bereitstellen eines Bauteils, umfassend ein Trägerelement und eine darin einsetzbare Bauteilkomponente, wobei das Trägerelement eine zur Aufnahme der Bauteilkomponente ausgebildete Aufnahmeöffnung aufweist, wobei die Aufnahmeöffnung durch eine Randfläche begrenzt ist, wobei die Bauteilkomponente eine Seitenfläche aufweist und in die Aufnahmeöffnung entlang einer Einsetzrichtung einsetzbar ausgebildet ist, wobei die Bauteilkomponente in einem Grundzustand eine erste Temperatur und in einem Betriebszustand eine zweite Temperatur, welche höher als die erste Temperatur ist, aufweist, wobei das Bauteil dazu eingerichtet ist, die Bauteilkomponente im Grundzustand und im Betriebszustand in der Einsetzposition zu halten,
b) Aufbringen, mittels einer Zuführungsvorrichtung, von zumindest einem elastischen Ausgleichselement an einem zweiten Randflächenabschnitt der Randfläche der Aufnahmeöffnung, wobei das zumindest eine elastische Ausgleichselement ein Schaummaterial, welches bevorzugt elastisch und aushärtbar ausgebildet ist, umfasst, wobei das Schaummaterial während dem Aufbringen mittels der Zuführungsvorrichtung in einem plastischen Zustand vorliegt und nach dessen Aufbringung aushärtet, um das zumindest eine elastische Ausgleichselement auszubilden,
c) Einsetzen der Bauteilkomponente in die Aufnahmeöffnung, entlang der Einsetzrichtung, in eine Einsetzposition, wobei in der Einsetzposition ein erster Seitenflächenabschnitt der Seitenfläche einen, dem zweiten Randflächenabschnitt gegenüberliegenden, ersten Randflächenabschnitt der Randfläche kontaktiert und ein zweiter Seitenflächenabschnitt der Seitenfläche zu dem zweiten Randflächenabschnitt der Randfläche einen vorgegebenen Mindestabstand aufweist, wobei im eingesetzten Zustand das zumindest eine elastische Ausgleichselement den zweiten Randflächenabschnitts der Randfläche der Aufnahmeöffnung mit dem zweiten Seitenflächenabschnitt der Bauteilkomponente verbindet, wobei das Trägerelement ein Auflageelement aufweist, an welchem die Bauteilkomponente in der Einsetzposition zumindest abschnittsweise aufliegt, um gegen eine Verschiebung entlang der Einsetzrichtung über die Einsetzposition hinaus gesichert zu sein, wobei das ausgehärtete Schaummaterial dazu eingerichtet ist, eine Ausgleichskraft, in Reaktion auf eine thermische Verformung der Bauteilkomponente, auf die Bauteilkomponente zu übertragen, wobei die Ausgleichskraft entlang einer Richtung wirkt, welche einer thermischen Verformungsrichtung der Bauteilkomponente entgegengesetzt ist, wobei das das zumindest eine elastische Ausgleichselement ausbildende Schaummaterial derart ausgestaltet und dazu eingerichtet ist, durch dessen erwirkbare Ausgleichskraft bei einem Übergang vom Grundzustand in den Betriebszustand die Bauteilkomponente in der Einsetzposition zu halten.

Die Schritte b) und c) können auch in umgekehrter Reihenfolge durchgeführt werden. In diesem Fall wird zuerst die Bauteilkomponente in die Aufnahmeöffnung eingesetzt und danach das zumindest eine elastische Ausgleichselement aufgebracht, wobei nach dem Aufbringen das zumindest eine elastische Ausgleichselement den zweiten Randflächenabschnitt der Randfläche der Aufnahmeöffnung mit dem zweiten Seitenflächenabschnitt der Bauteilkomponente verbindet.

Erfindungsgemäß ist vorgesehen, dass das Trägerelement zumindest eine Einführöffnung aufweist, welche an einer der Randfläche der Aufnahmeöffnung abgewandten Außenfläche des Trägerelements angeordnet ist und sich von der Außenfläche hin zur Randfläche erstreckt, wobei die Zuführungsvorrichtung dazu eingerichtet ist, zur Ausbildung des zumindest einen elastischen Ausgleichselements gemäß Schritt b) das plastische Schaummaterial über die Einführöffnung hin zu der Bauteilkomponente einzubringen.

Es kann vorgesehen sein, dass der zweite Randflächenabschnitt der Randfläche der Aufnahmeöffnung eine Vertiefung aufweist, wobei die Zuführungsvorrichtung dazu eingerichtet ist, zur Ausbildung des zumindest einen elastischen Ausgleichselements gemäß Schritt b) das plastische Schaummaterial in die Vertiefung einzubringen.

Im Rahmen dieser Beschreibung sind die Begriffe "oben", "unten", "horizontal", "vertikal" als Angaben der Ausrichtung zu verstehen, wenn das Bauteil in normaler Benutzungsstellung angeordnet ist, nachdem es beispielsweise in einem Kraftfahrzeugscheinwerfer eingebaut wurde.

### Figurenbeschreibung

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine Draufsicht eines Ausführungsbeispiels eines erfindungsgemäßen Bauteils;
Fig. 2 eine Detailansicht von Fig. 1;
Fig. 3 eine Detailansicht eines Trägerelement des Bauteils gemäß Fig. 1; und
Fig. 4 eine Detailansicht eines Trägerelements einer zweiten Ausführungsform.

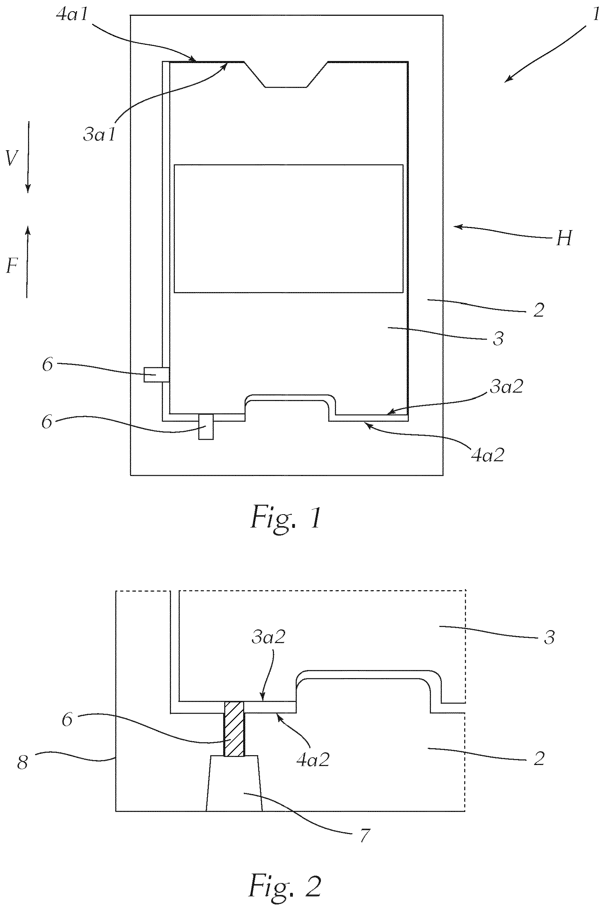

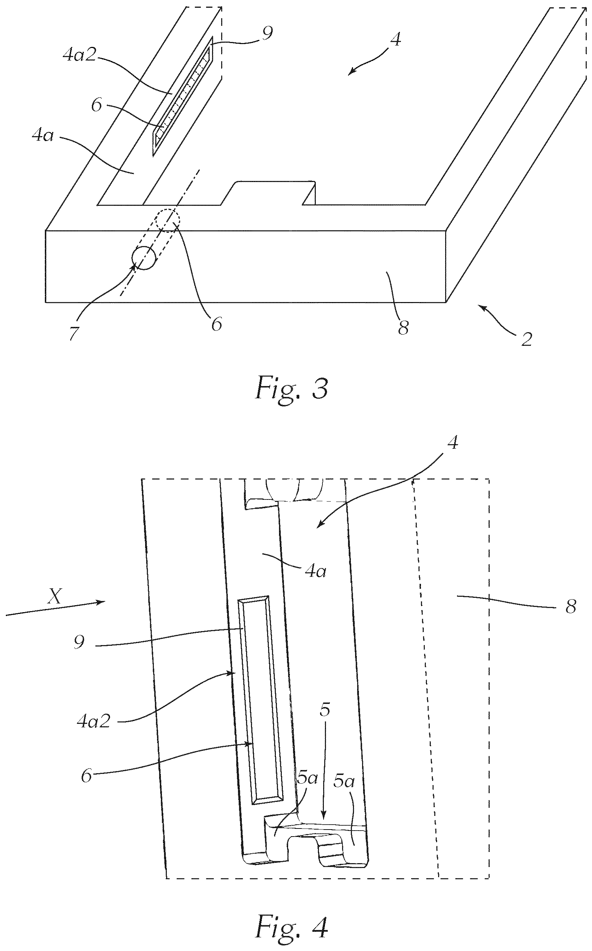

Fig. 1 zeigt ein Bauteil 1 für einen Kraftfahrzeugscheinwerfer. Das Bauteil 1 umfasst ein Trägerelement 2 und eine Bauteilkomponente 3. Das Trägerelement 2 hat eine zur Aufnahme der Bauteilkomponente ausgebildete Aufnahmeöffnung 4 (vgl. Fig. 4). Die Aufnahmeöffnung 4 ist durch eine Randfläche 4a begrenzt.

Die Bauteilkomponente 3 ist in die Aufnahmeöffnung 4 entlang einer Einsetzrichtung x (in Fig. 1 ist die Einsetzrichtung x orthogonal auf die Blattebene orientiert) einsetzbar ausgebildet und hat eine Seitenfläche 3a. Die Bauteilkomponente 3 ist im in die Aufnahmeöffnung 4 eingesetzten Zustand relativ zu der Aufnahmeöffnung 4 in einer Einsetzposition angeordnet, in welcher die Seitenfläche 3a der Bauteilkomponente 3 der Randfläche 4a der Aufnahmeöffnung 4 zugewandt ist. In der Einsetzposition kontaktiert ein erster Seitenflächenabschnitt 3a1 der Seitenfläche 3a einen ersten Randflächenabschnitt 4a1 der Randfläche 4a und ein zweiter Seitenflächenabschnitt 3a2 der Seitenfläche 3a ist zu einem zweiten Randflächenabschnitt 4a2 der Randfläche 4a in einen vorgegebenen Mindestabstand beabstandet. Der Mindestabstand ist als ein Orthogonalabstand zwischen dem zweiten Seitenflächenabschnitt 3a2 der Seitenfläche 3a der Bauteilkomponente 3 und dem zweiten Randflächenabschnitt 4a2 der Randfläche 4a der Aufnahmeöffnung 4 definiert. In der Einsetzposition kann die Bauteilkomponente 3 derart in der Aufnahmeöffnung 4 eingesetzt sein, dass im Grundzustand der Mindestabstand entlang des gesamten zweiten Randflächenabschnitts 4a2 der Randfläche 4a der Aufnahmeöffnung 4 im Wesentlichen gleich groß ist. Die Bauteilkomponente 3 und das Trägerelement 2 können derart ausgestaltet sein, dass im Grundzustand der Mindestabstand größer ist als eine temperaturbedingte relative Längenänderung der Bauteilkomponente 3 entlang zumindest einer thermischen Ausdehnungsrichtung (insbesondere entlang der Verformungsrichtung V), welche orthogonal auf die Einsetzrichtung x orientiert ist und insbesondere innerhalb einer die Aufnahmeöffnung 4 definierende Hauptebene H liegt. Der Mindestabstand zwischen dem zweiten Randflächenabschnitt 4a2 der Randfläche 4a der Aufnahmeöffnung 4 und dem zweiten Seitenflächenabschnitt 3a2 der Seitenfläche 3a der Bauteilkomponente 3 ist im Grundzustand größer als im Betriebszustand.

In den gezeigten Ausführungsbeispielen ist die Aufnahmeöffnung 4 als ein in dem Trägerelement ausgebildetes Durchgangsloch ausgestaltet, wobei die Bauteilkomponente 3 die Aufnahmeöffnung 4 zumindest abschnittsweise durchsetzt.

Die Bauteilkomponente 3 hat in einem Grundzustand eine erste Temperatur und in einem Betriebszustand eine zweite Temperatur, welche höher als die erste Temperatur ist. Das Bauteil 1 ist dazu eingerichtet, die Bauteilkomponente 3 im Grundzustand und im Betriebszustand in der Einsetzposition zu halten.

Die Bauteilkomponente 3 umfasst ein erstes Material, welches einen ersten Wärmeausdehnungskoeffizient aufweist. Das Trägerelement 2 umfasst ein zweites Material, welches einen zweiten Wärmeausdehnungskoeffizient aufweist, welcher von dem ersten Wärmeausdehnungskoeffizient unterschiedlich ist. Bei einem Übergang von dem Grundzustand in den Betriebszustand ist die Wärmeausdehnung der Bauteilkomponente 3 zur Wärmeausdehnung des Trägerelements 2 unterschiedlich, insbesondere größer.

Das Bauteil 1 umfasst zumindest ein elastisches Ausgleichselement 6, welches an einem dem ersten Randflächenabschnitt 4a1 gegenüberliegenden zweiten Randflächenabschnitt 4a2 der Randfläche 4a angeordnet ist. Das in Fig. 1 gezeigte Ausführungsbeispiel hat zwei Ausgleichselemente 6, wobei das zweite (optionale) Ausgleichselement 6 an einem weiteren (linken) Randflächenabschnitt, welcher an den zweiten Randflächenabschnitt 4a2 angrenzt, angeordnet ist. Es können beispielsweise auch mehrere Ausgleichselemente 6 an dem zweiten Randflächenabschnitt 4a2 angeordnet sein. Das zumindest eine elastische Ausgleichselement 6 verbindet den zweiten Randflächenabschnitt 4a2 der Randfläche 4a mit dem zweiten Seitenflächenabschnitt 3a2 der Seitenfläche 3a der Bauteilkomponente 3. Das zumindest eine elastische Ausgleichselement 6 ist ein Schaummaterial, welches bevorzugt elastisch und aushärtbar ausgebildet ist. Das Schaummaterial ist dazu eingerichtet, eine Ausgleichskraft F, in Reaktion auf eine thermische Verformung der Bauteilkomponente 3, auf die Bauteilkomponente 3 zu übertragen, wobei die Ausgleichskraft F entlang einer Richtung wirkt, welche einer thermischen Verformungsrichtung V der Bauteilkomponente 3 entgegengesetzt ist. Das, das zumindest eine elastische Ausgleichselement 6 ausbildende, Schaummaterial ist derart ausgestaltet und dazu eingerichtet, durch dessen erwirkbare Ausgleichskraft F bei einem Übergang vom Grundzustand in den Betriebszustand die Bauteilkomponente 3 im Wesentlichen in der Einsetzposition zu halten.

Das zumindest eine elastische Ausgleichselement 6 ist bevorzugt dazu eingerichtet, bei einem Übergang von dem Betriebszustand zurück in den Grundzustand eine der Ausgleichskraft F entgegengesetzte Rückstellkraft auf die Bauteilkomponente 3 auszuüben, um die Bauteilkomponente 3 bei einem Übergang vom Betriebszustand in den Grundzustand in der Einsetzposition zu halten. Die Ausgleichswirkung des elastischen Ausgleichselements 6 ist bevorzugt reversibel.

Das Schaummaterial umfasst ein Material, welches eine Mindesthaftkraft zwischen der Randfläche 4 der Aufnahmeöffnung 4 und/oder der Seitenfläche 3a der Bauteilkomponente 3 aufweist, wobei durch die Mindesthaftkraft ein Anhaften des Schaummaterials an der Randfläche 4 und/oder an der Seitenfläche 3a zumindest gegen die Schwerkraft erreichbar ist.

In dem in Fig. 2 und 3 gezeigten Ausführungsbeispiel hat das Trägerelement 2 zumindest eine Einführöffnung 7, welche an einer der Randfläche 4a der Aufnahmeöffnung 4 abgewandten Außenfläche 8 des Trägerelements 2 angeordnet ist und sich von der Außenfläche 8 hin zum zweiten Randflächenabschnitt 4a2 der Randfläche 4a erstreckt. Das zumindest eine elastische Ausgleichselement 6 ist über die Einführöffnung 7 hin zu der Bauteilkomponente 3 einbringbar. Das das Ausgleichselement 6 ausbildende Schaummaterial ist derart ausgebildet, dass es in einem Zuführzustand mit einer Zuführungsvorrichtung (beispielsweise einem automatisierten Zuführroboter) in die Einführöffnung 7 einbringbar ist, wobei das Schaummaterial vor und während der Zuführung plastisch ausgebildet ist und nach der Zuführung aushärtet. Das ausgehärtete Schaummaterial bildet das zumindest eine elastische Ausgleichselement 6. In dem Ausführungsbeispiel gemäß Fig. 3 weist die Randfläche 4a zusätzlich zur Einführöffnung 7 auch eine optionale Vertiefung 9 auf, in welcher ein weiteres optionales Ausgleichselement 6 aufgenommen ist.

Wie in Fig. 4 gezeigt, hat das Trägerelement 2 ein Auflageelement 5, an welchem die Bauteilkomponente 3 in der Einsetzposition zumindest abschnittsweise aufliegt, um gegen eine Verschiebung entlang der Einsetzrichtung x über die Einsetzposition hinaus gesichert zu sein. Das Auflageelement 5 hat zumindest zwei Auflagevorsprünge 5a, welche bevorzugt an gegenüberliegenden Seiten der Aufnahmeöffnung 4 angeordnet sind, wobei sich die zumindest zwei Auflagevorsprünge 5a in Richtung eines Zentrums der Aufnahmeöffnung 4 erstrecken. In der Einsetzposition kontaktiert die Bauteilkomponente 3 die zumindest zwei Auflagevorsprünge 5a derart, sodass ein vollständiges Durchsetzen von der Bauteilkomponente 3 durch die Aufnahmeöffnung 4 hindurch blockiert ist.

In dem in Fig. 4 gezeigten Ausführungsbeispiel hat der zweite Randflächenabschnitt 4a2 der Randfläche 4a eine Vertiefung 9, in welche das zumindest eine elastische Ausgleichselement 6 zumindest abschnittsweise aufgenommen ist. Dieses Ausführungsbeispiel kann insbesondere auch zumindest eine Einführöffnung 7 aufweisen.

Vorzugsweise umfasst der zweite Randflächenabschnitt 4a2 der Randfläche 4a an zwei sich gegenüberliegenden weiteren Abschnitten jeweils ein weiteres elastisches Ausgleichselement 6. Vorzugsweise umfassen die zwei weiteren Abschnitte des zweiten Randflächenabschnitts 4a2 jeweils eine Vertiefung 9, in welche ein weiteres elastisches Ausgleichselement 6 zumindest abschnittsweise aufgenommen ist, oder die zwei weiteren Abschnitte umfassen jeweils eine weitere Einführöffnung 7, über welche Schaummaterial zur Ausbildung der elastischen Ausgleichselemente 6 zuführbar ist.

### LISTE DER BEZUGSZEICHEN

- 1: Bauteil 1
- 2: Trägerelement
- 3: Bauteilkomponente
- 3a: Seitenfläche
- 3a1: erster Seitenflächenabschnitt
- 3a2: zweiter Seitenflächenabschnitt
- 4a: Randfläche
- 4a1: erster Randflächenabschnitt
- 4a2: zweiter Randflächenabschnitt
- 5: Auflageelement
- 6: Ausgleichselement
- 7: Einführöffnung
- 8: Außenfläche
- 9: Vertiefung
- F: Ausgleichskraft
- V: Verformungsrichtung
- x: Einsetzrichtung

## Patentansprüche

1. Bauteil (1) für einen Kraftfahrzeugscheinwerfer,
wobei das Bauteil (1) ein Trägerelement (2) und eine Bauteilkomponente (3), insbesondere ein DMD-Element, aufweist, wobei das Trägerelement (2) eine zur Aufnahme der Bauteilkomponente ausgebildete Aufnahmeöffnung (4) aufweist, wobei die Aufnahmeöffnung (4) durch eine Randfläche (4a) begrenzt ist, wobei die Bauteilkomponente (3) in die Aufnahmeöffnung (4) entlang einer Einsetzrichtung (x) einsetzbar ausgebildet ist und eine Seitenfläche (3a) aufweist, wobei die Bauteilkomponente (3) im in die Aufnahmeöffnung (4) eingesetzten Zustand relativ zu der Aufnahmeöffnung (4) in einer Einsetzposition angeordnet ist, in welcher die Seitenfläche (3a) der Bauteilkomponente (3) der Randfläche (4a) der Aufnahmeöffnung (4) zugewandt ist, wobei in der Einsetzposition ein erster Seitenflächenabschnitt (3a1) der Seitenfläche (3a) einen ersten Randflächenabschnitt (4a1) der Randfläche (4a) kontaktiert und ein zweiter Seitenflächenabschnitt (3a2) der Seitenfläche (3a) zu einem zweiten Randflächenabschnitt (4a2) der Randfläche (4a) einen vorgegebenen Mindestabstand aufweist,
wobei das Trägerelement (2) ein Auflageelement (5) aufweist, an welchem die Bauteilkomponente (3) in der Einsetzposition zumindest abschnittsweise aufliegt, um gegen eine Verschiebung entlang der Einsetzrichtung (x) über die Einsetzposition hinaus gesichert zu sein,
wobei die Bauteilkomponente (3) in einem Grundzustand eine erste Temperatur und in einem Betriebszustand eine zweite Temperatur, welche höher als die erste Temperatur ist, aufweist, wobei das Bauteil (1) dazu eingerichtet ist, die Bauteilkomponente (3) im Grundzustand und im Betriebszustand in der Einsetzposition zu halten, wobei
das Bauteil (1) zumindest ein elastisches Ausgleichselement (6) aufweist, welches an einem dem ersten Randflächenabschnitt (4a1) gegenüberliegenden Abschnitt des zweiten Randflächenabschnitts (4a2) der Randfläche (4a) angeordnet ist, wobei das zumindest eine elastische Ausgleichselement (6) den zweiten Randflächenabschnitt (4a2) der Randfläche (4a) mit dem zweiten Seitenflächenabschnitt (3a2) der Seitenfläche (3a) der Bauteilkomponente (3) verbindet, wobei das zumindest eine elastische Ausgleichselement dazu eingerichtet ist, eine Ausgleichskraft (F), in Reaktion auf eine thermische Verformung der Bauteilkomponente (3), auf die Bauteilkomponente (3) zu übertragen, wobei die Ausgleichskraft (F) entlang einer Richtung wirkt, welche einer thermischen Verformungsrichtung (V) der Bauteilkomponente (3) entgegengesetzt ist, wobei das zumindest eine elastische Ausgleichselement (6) derart ausgestaltet und dazu eingerichtet ist, durch dessen erwirkbare Ausgleichskraft (F) bei einem Übergang vom Grundzustand in den Betriebszustand die Bauteilkomponente (3), insbesondere im Wesentlichen, in der Einsetzposition zu halten,
**dadurch gekennzeichnet, dass**
das zumindest eine elastische Ausgleichselement (6) ein Schaummaterial, welches bevorzugt elastisch und aushärtbar ausgebildet ist, umfasst, wobei
das Trägerelement (2) zumindest eine Einführöffnung (7) aufweist, welche an einer der Randfläche (4a) der Aufnahmeöffnung (4) abgewandten Außenfläche (8) des Trägerelements (2) angeordnet ist und sich von der Außenfläche (8) hin zur Randfläche (4a) erstreckt, wobei das zumindest eine elastische Ausgleichselement (6) über die Einführöffnung (7) hin zu der Bauteilkomponente (3) einbringbar ist.

2. Bauteil (1) nach Anspruch 1, wobei das zumindest eine elastische Ausgleichselement (6) dazu eingerichtet ist, bei einem Übergang von dem Betriebszustand in den Grundzustand eine der Ausgleichskraft (F) entgegengesetzte Rückstellkraft auf die Bauteilkomponente (3) auszuüben, um die Bauteilkomponente (3) bei einem Übergang vom Betriebszustand in den Grundzustand in der Einsetzposition zu halten.

3. Bauteil (1) nach einem der vorhergehenden Ansprüche, wobei die Bauteilkomponente (3) und das Trägerelement (2) derart ausgestaltet sind, dass im Grundzustand der Mindestabstand größer ist als eine temperaturbedingte relative Längenänderung der Bauteilkomponente (3) entlang zumindest einer thermischen Ausdehnungsrichtung, welche orthogonal auf die Einsetzrichtung (x) orientiert ist und insbesondere innerhalb einer die Aufnahmeöffnung (4) definierende Hauptebene (H) liegt.

4. Bauteil (1) nach einem der vorhergehenden Ansprüche, wobei in der Einsetzposition die Bauteilkomponente (3) derart in der Aufnahmeöffnung (4) eingesetzt ist, dass im Grundzustand der Mindestabstand entlang des gesamten zweiten Randflächenabschnitts (4a2) der Randfläche (4a) der Aufnahmeöffnung (4) im Wesentlichen gleich groß ist, wobei vorzugsweise der Mindestabstand als ein Orthogonalabstand zwischen dem zweiten Seitenflächenabschnitt (3a2) der Seitenfläche (3a) der Bauteilkomponente (3) und der dem zweiten Randflächenabschnitt (4a2) der Randfläche (4a) der Aufnahmeöffnung (4) definiert ist.

5. Bauteil (1) nach einem der vorhergehenden Ansprüche, wobei die Aufnahmeöffnung (4) als ein in dem Trägerelement ausgebildetes Durchgangsloch ausgestaltet ist.

6. Bauteil (1) nach einem der vorhergehenden Ansprüche, wobei das Auflageelement (5) zumindest zwei Auflagevorsprünge (5a) aufweist, welche bevorzugt an gegenüberliegenden Seiten der Aufnahmeöffnung (4) angeordnet sind, wobei sich die zumindest zwei Auflagevorsprünge (5a) in Richtung eines Zentrums der Aufnahmeöffnung (4) erstrecken, wobei in der Einsetzposition die Bauteilkomponente (3) die zumindest zwei Auflagevorsprünge (5a) derart kontaktiert, dass ein vollständiges Durchsetzen von der Bauteilkomponente (3) durch die Aufnahmeöffnung (4) hindurch blockiert ist.

7. Bauteil (1) nach einem der vorhergehenden Ansprüche, wobei die Bauteilkomponente (3) ein erstes Material, welches einen ersten Wärmeausdehnungskoeffizient aufweist, und das Trägerelement (2) ein zweites Material, welches einen zweiten Wärmeausdehnungskoeffizient, welcher von dem ersten Wärmeausdehnungskoeffizient unterschiedlich ist, aufweist, sodass bei einem Übergang von dem Grundzustand in den Betriebszustand die Wärmeausdehnung der Bauteilkomponente (3) unterschiedlich, insbesondere größer, zur Wärmeausdehnung des Trägerelements (2) ist.

8. Bauteil (1) nach einem der vorhergehenden Ansprüche, wobei das Schaummaterial ein Material umfasst, welches eine Mindesthaftkraft zwischen der Randfläche (4) der Aufnahmeöffnung (4) und/oder der Seitenfläche (3a) der Bauteilkomponente (3) aufweist, wobei durch die Mindesthaftkraft ein Anhaften des Schaummaterials an der Randfläche (4) und/oder an der Seitenfläche (3a) zumindest gegen die Schwerkraft erreichbar ist.

9. Bauteil (1) nach einem der vorhergehenden Ansprüche, wobei das Schaummaterial derart ausgebildet ist, dass es in einem Zuführzustand mit einer Zuführungsvorrichtung in die Einführöffnung (7) einbringbar ist, wobei das Schaummaterial vor und während der Zuführung plastisch ausgebildet ist und nach der Zuführung aushärtbar ausgebildet ist, wobei das ausgehärtete Schaummaterial das zumindest eine elastische Ausgleichselement (6) ausbildet.

10. Bauteil (1) nach einem der Ansprüche 1 bis 8, wobei der zweite Randflächenabschnitt (4a2) der Randfläche (4a) eine Vertiefung (9) aufweist, in welche das zumindest eine elastische Ausgleichselement (6) zumindest abschnittsweise aufgenommen ist.

11. Bauteil (1) nach einem der vorhergehenden Ansprüche, wobei der zweite Randflächenabschnitt (4a2) der Randfläche (4a) an zwei, vorzugsweise sich gegenüberliegenden, weiteren Abschnitten jeweils ein weiteres elastisches Ausgleichselement (6) aufweist, wobei vorzugsweise die zwei weiteren Abschnitte des zweiten Randflächenabschnitts (4a2) jeweils eine Vertiefung (9) aufweisen, in welche ein weiteres elastisches Ausgleichselement (6) zumindest abschnittsweise aufgenommen ist, oder jeweils eine weitere Einführöffnung (7) aufweisen, über welche Schaummaterial zur Ausbildung der elastischen Ausgleichselemente (6) zuführbar ist.

12. Kraftfahrzeugscheinwerfer, umfassend ein Bauteil (1) nach einem der vorhergehenden Ansprüche.

13. Verfahren zur Herstellung eines Bauteils (1), wobei das Verfahren die folgenden Schritte aufweist:
a) Bereitstellen eines Bauteils (1), umfassend ein Trägerelement (2) und eine darin einsetzbare Bauteilkomponente (3), wobei das Trägerelement (2) eine zur Aufnahme der Bauteilkomponente ausgebildete Aufnahmeöffnung (4) aufweist, wobei die Aufnahmeöffnung (4) durch eine Randfläche (4a) begrenzt ist, wobei die Bauteilkomponente (3) eine Seitenfläche (3a) aufweist und in die Aufnahmeöffnung (4) entlang einer Einsetzrichtung (x) einsetzbar ausgebildet ist, wobei die Bauteilkomponente (3) in einem Grundzustand eine erste Temperatur und in einem Betriebszustand eine zweite Temperatur, welche höher als die erste Temperatur ist, aufweist, wobei das Bauteil (1) dazu eingerichtet ist, die Bauteilkomponente (3) im Grundzustand und im Betriebszustand in der Einsetzposition zu halten,
b) Aufbringen, mittels einer Zuführungsvorrichtung, von zumindest einem elastischen Ausgleichselement (6) an einem zweiten Randflächenabschnitt (4a2) der Randfläche (4a) der Aufnahmeöffnung (4), wobei das zumindest eine elastische Ausgleichselement (6) während dem Aufbringen mittels der Zuführungsvorrichtung in einem plastischen Zustand vorliegt und nach dessen Aufbringung aushärtet, um das zumindest eine elastische Ausgleichselement (6) auszubilden,
c) Einsetzen der Bauteilkomponente (3) in die Aufnahmeöffnung (4), entlang der Einsetzrichtung (x), in eine Einsetzposition, wobei in der Einsetzposition ein erster Seitenflächenabschnitt (3a1) der Seitenfläche (3a) einen, dem zweiten Randflächenabschnitt (4a2) gegenüberliegenden, ersten Randflächenabschnitt (4a1) der Randfläche (4a) kontaktiert und ein zweiter Seitenflächenabschnitt (3a2) der Seitenfläche (3a) zu dem zweiten Randflächenabschnitt (4a2) der Randfläche (4a) einen vorgegebenen Mindestabstand aufweist, wobei im eingesetzten Zustand das zumindest eine elastische Ausgleichselement (6) den zweiten Randflächenabschnitts (4a2) der Randfläche (4a) der Aufnahmeöffnung (4) mit dem zweiten Seitenflächenabschnitt (3a2) der Bauteilkomponente (3) verbindet, wobei das Trägerelement (2) ein Auflageelement (5) aufweist, an welchem die Bauteilkomponente (3) in der Einsetzposition zumindest abschnittsweise aufliegt, um gegen eine Verschiebung entlang der Einsetzrichtung (x) über die Einsetzposition hinaus gesichert zu sein, wobei das ausgehärtete Ausgleichselement (6) dazu eingerichtet ist, eine Ausgleichskraft (F), in Reaktion auf eine thermische Verformung der Bauteilkomponente (3), auf die Bauteilkomponente (3) zu übertragen, wobei die Ausgleichskraft (F) entlang einer Richtung wirkt, welche einer thermischen Verformungsrichtung (V) der Bauteilkomponente (3) entgegengesetzt ist, wobei das das zumindest eine elastische Ausgleichselement (6) derart ausgestaltet und dazu eingerichtet ist, durch dessen erwirkbare Ausgleichskraft (F) bei einem Übergang vom Grundzustand in den Betriebszustand die Bauteilkomponente (3) in der Einsetzposition zu halten,
**dadurch gekennzeichnet, dass**
das zumindest eine elastische Ausgleichselement (6) ein Schaummaterial, welches bevorzugt elastisch und aushärtbar ausgebildet ist, umfasst, wobei
das Trägerelement (2) zumindest eine Einführöffnung (7) aufweist, welche an einer der Randfläche (4a) der Aufnahmeöffnung (4) abgewandten Außenfläche (8) des Trägerelements (2) angeordnet ist und sich von der Außenfläche (8) hin zur Randfläche (4a) erstreckt, wobei die Zuführungsvorrichtung dazu eingerichtet ist, zur Ausbildung des zumindest einen elastischen Ausgleichselements (6) gemäß Schritt b) das plastische Schaummaterial über die Einführöffnung (7) hin zu der Bauteilkomponente (3) einzubringen.

14. Verfahren nach Anspruch 13, wobei der zweite Randflächenabschnitt (4a2) der Randfläche (4a) der Aufnahmeöffnung (4) eine Vertiefung (9) aufweist, wobei die Zuführungsvorrichtung dazu eingerichtet ist, zur Ausbildung des zumindest einen elastischen Ausgleichselements (6) gemäß Schritt b) das plastische Schaummaterial in die Vertiefung (9) einzubringen.

## Claims

1. Component (1) for a motor vehicle headlight,
wherein the component (1) has a carrier element (2) and a component part (3), in particular a DMD element, wherein the carrier element (2) has a receiving opening (4) designed to receive the component part, wherein the receiving opening (4) is bounded by an edge surface (4a), wherein the component part (3) is designed to be inserted into the receiving opening (4) along an insertion direction (x) and has a side surface (3a), wherein the component (3), when inserted into the receiving opening (4), is arranged relative to the receiving opening (4) in an insertion position in which the side surface (3a) of the component (3) faces the edge surface (4a) of the receiving opening (4), wherein, in the insertion position, a first side surface section (3a1) of the side surface (3a) contacts a first edge surface section (4a1) of the edge surface (4a) and a second side surface section (3a2) of the side surface (3a) has a predetermined minimum distance to a second edge surface section (4a2) of the edge surface (4a),
wherein the carrier element (2) has a support element (5) on which the component (3) rests at least in sections in the insertion position in order to be secured against displacement along the insertion direction (x) beyond the insertion position,
wherein the component part (3) has a first temperature in a basic state and a second temperature, which is higher than the first temperature, in an operating state, wherein the component (1) is designed to hold the component part (3) in the insertion position in the basic state and in the operating state, wherein
the component (1) has at least one elastic compensating element (6) which is arranged on a section of the second edge surface section (4a2) of the edge surface (4a) opposite the first edge surface section (4a1), wherein the at least one elastic compensating element (6) connects the second edge surface section (4a2) of the edge surface (4a) to the second side surface section (3a2) of the side surface (3a) of the component part (3), wherein the at least one elastic compensating element is designed to transmit a compensating force (F) to the component part (3) in response to thermal deformation of the component part (3), to the component (3), wherein the compensating force (F) acts along a direction opposite to a thermal deformation direction (V) of the component (3), wherein the at least one elastic compensating element (6) is designed and arranged such that, by means of the compensating force (F) it can exert, the component (3) is held in the insertion position during a transition from the basic state to the operating state, in particular to hold it substantially in the insertion position,
**characterized in that**
the at least one elastic compensating element (6) comprises a foam material which is preferably elastic and curable, wherein
the carrier element (2) has at least one insertion opening (7) which is arranged on an outer surface (8) of the carrier element (2) facing away from the receiving opening (4) and extends from the outer surface (8) toward the edge surface (4a), wherein the at least one elastic compensating element (6) can be inserted via the insertion opening (7) toward the component (3).

2. Component (1) according to claim 1, wherein the at least one elastic compensating element (6) is designed to exert a restoring force opposite to the compensating force (F) on the component component (3) during a transition from the operating state to the basic state in order to hold the component component (3) in the insertion position during a transition from the operating state to the basic state.

3. Component (1) according to one of the preceding claims, wherein the component part (3) and the carrier element (2) are designed such that, in the basic state, the minimum distance is greater than a temperature-related relative change in length of the component part (3) along at least one thermal expansion direction, which is oriented orthogonally to the insertion direction (x) and, in particular, lies within a main plane (H) defining the receiving opening (4).

4. Component (1) according to one of the preceding claims, wherein, in the insertion position, the component (3) is inserted into the receiving opening (4) in such a way that, in the basic state, the minimum distance along the entire second edge surface section (4a2) of the edge surface (4a) of the receiving opening (4) is essentially the same, wherein the minimum distance is preferably defined as an orthogonal distance between the second side surface section (3a2) of the side surface (3a) of the component part (3) and the second edge surface section (4a2) of the edge surface (4a) of the receiving opening (4).

5. Component (1) according to one of the preceding claims, wherein the receiving opening (4) is designed as a through hole formed in the carrier element.

6. Component (1) according to one of the preceding claims, wherein the support element (5) has at least two support projections (5a) which are preferably arranged on opposite sides of the receiving opening (4), wherein the at least two support projections (5a) extend in the direction of a center of the receiving opening (4), wherein, in the insertion position, the component component (3) contacts the at least two support projections (5a) in such a way that complete passage of the component component (3) through the receiving opening (4) is blocked.

7. Component (1) according to one of the preceding claims, wherein the component part (3) comprises a first material having a first coefficient of thermal expansion, and the carrier element (2) comprises a second material which has a second coefficient of thermal expansion which differs from the first coefficient of thermal expansion, so that, during a transition from the basic state to the operating state, the thermal expansion of the component part (3) differs from, in particular is greater than, the thermal expansion of the carrier element (2).

8. Component (1) according to one of the preceding claims, wherein the foam material comprises a material which has a minimum adhesive force between the edge surface (4) of the receiving opening (4) and/or the side surface (3a) of the component part (3), wherein the minimum adhesive force allows the foam material to adhere to the edge surface (4) and/or the side surface (3a) at least against the force of gravity.

9. Component (1) according to one of the preceding claims, wherein the foam material is designed such that, in a feed state, it can be introduced into the insertion opening (7) with a feeding device, wherein the foam material is plastically formed before and during feeding and is formed to be curable after feeding, wherein the cured foam material forms the at least one elastic compensating element (6).

10. Component (1) according to one of claims 1 to 8, wherein the second edge surface section (4a2) of the edge surface (4a) has a recess (9) in which the at least one elastic compensating element (6) is received at least in sections.

11. Component (1) according to one of the preceding claims, wherein the second edge surface section (4a2) of the edge surface (4a) has a further elastic compensating element (6) at two, preferably opposite, further sections, wherein preferably the two further sections of the second edge surface section (4a2) each have a recess (9) in which a further elastic compensating element (6) is accommodated at least in sections, or each have a further insertion opening (7) through which foam material can be fed to form the elastic compensating elements (6).

12. Motor vehicle headlamp comprising a component (1) according to one of the preceding claims.

13. Method for manufacturing a component (1), wherein the method comprises the following steps:
a) providing a component (1) comprising a carrier element (2) and a component part (3) insertable therein, wherein the carrier element (2) has a receiving opening (4) designed to receive the component part, wherein the receiving opening (4) is bounded by an edge surface (4a), wherein the component part (3) has a side surface (3a) and is designed to be inserted into the receiving opening (4) along an insertion direction (x), wherein the component (3) has a first temperature in a basic state and a second temperature, which is higher than the first temperature, in an operating state, wherein the component (1) is designed to hold the component (3) in the insertion position in the basic state and in the operating state,
b) application, by means of a feed device, of at least one elastic compensating element (6) to a second edge surface section (4a2) of the edge surface (4a) of the receiving opening (4), wherein the at least one elastic compensating element (6) is in a plastic state during application by means of the feed device and hardens after application to form the at least one elastic compensating element (6),
c) insertion of the component part (3) into the receiving opening (4), along the insertion direction (x), into an insertion position, wherein in the insertion position a first side surface section (3a1) of the side surface (3a) contacts a first edge surface section (4a1) of the edge surface (4a) opposite the second edge surface section (4a2) (4a1) of the edge surface (4a) opposite the second edge surface section (4a2) of the edge surface (4a), and a second side surface section (3a2) of the side surface (3a) has a predetermined minimum distance to the second edge surface section (4a2) of the edge surface (4a), wherein, in the inserted state, the at least one elastic compensating element (6) connects the second edge surface section (4a2) of the edge surface (4a) of the receiving opening (4) with the second side surface section (3a2) of the component part (3), wherein the carrier element (2) has a support element (5) on which the component part (3) rests at least in sections in the insertion position in order to be secured against displacement along the insertion direction (x) beyond the insertion position, wherein the cured compensating element (6) is designed to transmit a compensating force (F) to the component part (3) in response to thermal deformation of the component part (3), to the component (3), wherein the compensating force (F) acts along a direction which is opposite to a thermal deformation direction (V) of the component (3), wherein the at least one elastic compensating element (6) is designed and arranged such that, by means of the compensating force (F) that can be exerted by it during a transition from the basic state to the operating state, it holds the component (3) in the insertion position,
**characterized in that**
the at least one elastic compensating element (6) comprises a foam material which is preferably elastic and curable, wherein
the carrier element (2) has at least one insertion opening (7) which is arranged on an outer surface (8) of the carrier element (2) facing away from the edge surface (4a) of the receiving opening (4) and extends from the outer surface
(8) to the edge surface (4a), wherein the feed device is designed to introduce the plastic foam material via the insertion opening (7) to the component (3) in order to form the at least one elastic compensating element (6) in accordance with step b).

14. Method according to claim 13, wherein the second edge surface section (4a2) of the edge surface (4a) of the receiving opening (4) has a recess (9), wherein the feed device is designed to introduce the plastic foam material into the recess (9) in order to form the at least one elastic compensating element (6) in accordance with step b).

## Revendications

1. Composant (1) pour un phare de véhicule automobile,
le composant (1) comportant un élément de support (2) et un composant (3), en particulier un élément DMD, l'élément de support (2) présentant une ouverture de réception (4) conçue pour recevoir le composant, l'ouverture de réception (4) étant délimitée par une surface de bord (4a), le composant (3) pouvant être inséré dans l'ouverture de réception (4) le long d'une direction d'insertion (x) et comporte une surface latérale (3a), le composant (3) étant disposé, à l'état inséré dans l'ouverture de réception (4), par rapport à l'ouverture de réception (4) dans une position d'insertion dans laquelle la surface latérale (3a) du composant (3) est tournée vers la surface de bord (4a) de l'ouverture de réception (4), dans laquelle, dans la position d'insertion, une première partie de surface latérale (3a1) de la surface latérale (3a) est en contact avec une première partie de surface de bord (4a1) de la surface de bord (4a) et une deuxième partie de surface latérale (3a2) de la surface latérale (3a) présente une deuxième partie de surface de bord (4a2) de la surface périphérique (4a),
l'élément de support (2) comportant un élément d'appui (5) sur lequel le composant (3) repose au moins par sections dans la position d'insertion afin d'être immobilisé contre tout déplacement le long de la direction d'insertion (x) au-delà de la position d'insertion,
le composant (3) présentant une première température dans un état de base et une deuxième température, supérieure à la première température, dans un état de fonctionnement, le composant (1) étant conçu pour maintenir le composant (3) dans la position d'insertion dans l'état de base et dans l'état de fonctionnement,
le composant (1) présente au moins un élément de compensation élastique (6) qui est disposé sur une partie de la deuxième partie de surface de bord (4a2) de la surface de bord (4a) opposée à la première partie de surface de bord (4a1), le au moins un élément de compensation élastique (6) reliant la deuxième partie de surface de bord (4a2) de la surface de bord (4a) à la deuxième partie de surface latérale (3a2) de la surface latérale (3a) du composant (3), le au moins un élément de compensation élastique étant conçu pour sur le composant (3), la force de compensation (F) agissant dans une direction opposée à la direction de déformation thermique (V) du composant (3), le au moins un élément de compensation élastique (6) étant conçu et agencé de telle sorte que, grâce à la force de compensation (F) qu'il peut exercer lors du passage de l'état de base à l'état de fonctionnement, le composant (3) en particulier essentiellement, dans la position d'insertion,
**caractérisé en ce que**
le au moins un élément de compensation élastique (6) comprend un matériau en mousse, de préférence élastique et durcissable,
l'élément de support (2) comportant au moins une ouverture d'insertion (7) qui est disposée sur une surface extérieure (8) de l'élément de support (2) opposée à la surface de bord (4a) de l'ouverture de réception (4) et s'étend de la surface extérieure (8) vers la surface de bord (4a), le au moins un élément de compensation élastique (6) pouvant être introduit dans le composant (3) par l'ouverture d'introduction (7).

2. Composant (1) selon la revendication 1, dans lequel le au moins un élément de compensation élastique (6) est conçu pour exercer, lors d'un passage de l'état de fonctionnement à l'état de base, une force de rappel opposée à la force de compensation (F) sur le composant (3) afin de maintenir le composant (3) dans la position d'insertion lors du passage de l'état de fonctionnement à l'état de base.

3. Composant (1) selon l'une des revendications précédentes, dans lequel le composant (3) (3) et l'élément de support (2) sont conçus de telle sorte que, dans l'état de base, la distance minimale est supérieure à une variation de longueur relative due à la température du composant (3) le long d'au moins une direction de dilatation thermique qui est orientée orthogonalement à la direction d'insertion (x) et qui se trouve en particulier à l'intérieur d'un plan principal (H) définissant l'ouverture de réception (4).

4. Composant (1) selon l'une des revendications précédentes, dans lequel, dans la position d'insertion, le composant (3) est inséré dans l'ouverture de réception (4) de telle sorte que, dans l'état de base, la distance minimale le long de l'ensemble de la deuxième partie de surface de bord (4a2) de la surface de bord (4a) de l'ouverture de réception (4) est sensiblement la même, la distance minimale étant de préférence définie comme une distance orthogonale entre la deuxième partie de surface latérale (3a2) de la surface latérale (3a) du composant (3) et la deuxième partie de surface de bord (4a2) de la surface de bord (4a) de l'ouverture de réception (4).

5. Composant (1) selon l'une des revendications précédentes, l'ouverture de réception (4) étant conçue comme un trou traversant formé dans l'élément de support.

6. Composant (1) selon l'une des revendications précédentes, dans lequel l'élément d'appui (5) comporte au moins deux saillies d'appui (5a) qui sont disposées de préférence sur les côtés opposés de l'ouverture de réception (4), les au moins deux saillies d'appui (5a) s'étendant en direction d'un centre de l'ouverture de réception (4), dans lequel, dans la position d'insertion, le composant (3) entre en contact avec les au moins deux saillies d'appui (5a) de telle sorte qu'un passage complet du composant (3) à travers l'ouverture de réception (4) est bloqué.

7. Composant (1) selon l'une des revendications précédentes, le composant (3) comprenant un premier matériau qui présente un premier coefficient de dilatation thermique, et l'élément de support (2) un deuxième matériau qui présente un deuxième coefficient de dilatation thermique différent du premier coefficient de dilatation thermique, de sorte que lors du passage de l'état de base à l'état de fonctionnement, la dilatation thermique du composant (3) est différente, en particulier supérieure, à la dilatation thermique de l'élément de support (2).

8. Composant (1) selon l'une des revendications précédentes, le matériau en mousse comprenant un matériau qui présente une force d'adhérence minimale entre la surface périphérique (4) de l'ouverture de réception (4) et/ou la surface latérale (3a) du composant (3), la force d'adhérence minimale permettant au matériau en mousse d'adhérer à la surface périphérique (4) et/ou à la surface latérale (3a) au moins contre la force de gravité.

9. Composant (1) selon l'une des revendications précédentes, le matériau en mousse étant conçu de telle sorte qu'il peut être introduit dans l'ouverture d'insertion (7) à l'état d'alimentation à l'aide d'un dispositif d'alimentation (7) à l'aide d'un dispositif d'alimentation, le matériau en mousse étant formé de manière plastique avant et pendant l'alimentation et pouvant durcir après l'alimentation, le matériau en mousse durci formant au moins un élément de compensation élastique (6).

10. Composant (1) selon l'une des revendications 1 à 8, la deuxième partie (4a2) de la surface périphérique (4a) présentant un renfoncement (9) dans lequel est logé au moins partiellement le ou les éléments de compensation élastiques (6).

11. Composant (1) selon l'une des revendications précédentes, dans lequel la deuxième partie de surface périphérique (4a2) de la surface périphérique (4a) présente, sur deux autres parties, de préférence opposées, un autre élément de compensation élastique (6), les deux autres parties de la deuxième partie de surface périphérique (4a2) comportent chacune un renfoncement (9) dans lequel est logé au moins par sections un autre élément de compensation élastique (6), ou comportent chacune une autre ouverture d'introduction (7) par laquelle peut être introduit un matériau en mousse pour former les éléments de compensation élastiques (6).

12. Projecteur de véhicule automobile comprenant un composant (1) selon l'une des revendications précédentes.

13. Procédé de fabrication d'un composant (1), le procédé comprenant les étapes suivantes :
a) fourniture d'un composant (1) comprenant un élément de support (2) et un composant (3) pouvant y être inséré, l'élément de support (2) présentant une ouverture de réception (4) conçue pour recevoir le composant de composant, l'ouverture de réception (4) étant délimitée par une surface de bord (4a), le composant de composant (3) présentant une surface latérale (3a) et étant conçu pour être inséré dans l'ouverture de réception (4) dans une direction d'insertion (x), le composant (3) présentant une première température dans un état de base et une deuxième température, supérieure à la première température, dans un état de fonctionnement, le composant (1) étant conçu pour maintenir le composant (3) dans la position d'insertion dans l'état de base et dans l'état de fonctionnement,
b) application, au moyen d'un dispositif d'alimentation, d'au moins un élément de compensation élastique (6) sur une deuxième partie de surface périphérique (4a2) de la surface périphérique (4a) de l'ouverture de réception (4), ledit au moins un élément de compensation élastique (6) étant à l'état plastique pendant l'application au moyen du dispositif d'alimentation et durcissant après son application pour former ledit au moins un élément de compensation élastique (6),
c) insertion du composant (3) dans l'ouverture de réception (4), le long de la direction d'insertion (x), dans une position d'insertion, dans laquelle, dans la position d'insertion, une première partie de surface latérale (3a1) de la surface latérale (3a) est en contact avec une première partie de surface de bord (3a1) de la surface de bord (4a) opposée à la deuxième partie de surface de bord (4a2) (4a1) de la surface de bord (4a) et une deuxième partie de surface latérale (3a2) de la surface latérale (3a) présente une distance minimale prédéfinie par rapport à la deuxième partie de surface de bord (4a2) de la surface de bord (4a), dans lequel, à l'état inséré, le au moins un élément de compensation élastique (6) relie la deuxième partie de surface de bord (4a2) de la surface de bord (4a) de l'ouverture de réception (4) avec la deuxième partie de surface latérale (3a2) du composant (3), l'élément de support (2) comportant un élément d'appui (5) sur lequel le composant (3) repose au moins par sections dans la position d'insertion afin d'être protégé contre un déplacement le long de la direction d'insertion (x) au-delà de la position d'insertion, l'élément de compensation durci (6) étant conçu pour sur le composant (3), la force de compensation (F) agissant dans une direction opposée à la direction de déformation thermique (V) du composant (3), le ou les éléments de compensation élastiques (6) est conçu et adapté de telle sorte que la force de compensation (F) qu'il peut exercer lors du passage de l'état de base à l'état de fonctionnement maintient le composant (3) dans la position d'insertion,
**caractérisé en ce que**
le au moins un élément de compensation élastique (6) comprend un matériau en mousse, de préférence élastique et durcissable,
l'élément de support (2) présente au moins une ouverture d'introduction (7) qui est disposée sur une surface extérieure (8) de l'élément de support (2) opposée à la surface de bord (4a) de l'ouverture de réception (4) et s'étend de la surface extérieure
(8) vers la surface de bord (4a), le dispositif d'alimentation étant conçu pour introduire le matériau en mousse plastique par l'ouverture d'introduction (7) vers le composant (3) afin de former au moins un élément de compensation élastique (6) conformément à l'étape b).

14. Procédé selon la revendication 13, dans lequel la deuxième partie de surface périphérique (4a2) de la surface périphérique (4a) de l'ouverture de réception (4) présente un renfoncement (9), le dispositif d'alimentation étant conçu pour introduire le matériau en mousse plastique dans le renfoncement (9) afin de former au moins un élément de compensation élastique (6) conformément à l'étape b).
